# EUROPÄISCHE PATENTSCHRIFT

(11) **EP 0 471 648 B1**
(45) Veröffentlichungstag und Bekanntmachung des Hinweises auf die Patenterteilung: **18.10.1995**
(21) Anmeldenummer: 91810619.6
(22) Anmeldetag: 07.08.1991
(51) Int. Cl.: A61C 3/16

(54) **Vorrichtung zum Abziehen oder Entfernen von Zahnkronen und -brücken**
Apparatus for the removal of dental crowns and bridges
Appareil pour le descellement de couronnes et bridges dentaires

(30) Priorität: 15.08.1990 CH 2657/90; 26.07.1991 CH 2252/91
(43) Veröffentlichungstag der Anmeldung: 19.02.1992
(73) Patentinhaber: Andrew, Vladimir, F-67000 Strasbourg (FR)
(72) Erfinder: Andrew, Vladimir, F-67000 Strasbourg (FR)
(74) Vertreter: Gachnang, Hans Rudolf

(56) Entgegenhaltungen:
- DE-A- 3 406 514
- DE-A- 3 808 880
- US-A- 3 377 704
- US-A- 3 834 026

## Beschreibung

Die Erfindung betrifft eine Vorrichtung zum Abziehen oder Entfernen von Zahnbrücken gemäss Oberbegriff des Patentanspruches 1. Eine derartige Vorrichtung ist aus der DE-U-8810805.8 als dem nächstliegenden Stand der Technik bekannt.

Zahnkronen und Zahnbrücken aus Metall oder einem Metall-Keramikverbund müssen bei Defekten, Abnutzung oder bei Entzündung des Zahnfleisches oder Defekt des Unterbaus (Präparation) von letzterem abgenommen werden.

Aus der DE-A-3 808 880 ist eine Vorrichtung zum Abheben von Zahnersatz bekannt, der in Gebrauchslage anderem Zahnersatz zugeordnet ist und an diesem festliegt. Ein Trägerstab, der den abzuhebenden Zahnersatz überspannt, ist an zwei Distanzhaltern abgestützt. Wenigstens einer der beiden Distanzhalter weist einen Strömungsmittel beaufschlagten Zylinder auf, dessen volumenveränderlicher Zylinderraum von einem einen Abschnitt des Distanzhalters tragenden Kolben begrenzt ist. Über den Trägerstab sind Joche gelegt, an denen ein Drahtstück befestigt ist. Das eine Ende des Drahtstückes weist ein verdicktes Ende auf und wird in einer Bohrung am Joch gehalten. Das freie Ende ist durch ein zweites, dem ersten gegenüber angeordnetes Loch hindurchgeführt und wird von einem verstellbaren Klemmstück gehalten. Diese bekannte Vorrichtung hat den Nachteil, dass das Einführen des freien Endes des dünnen, maximal 0,5 mm dicken Drahtes von der Unterseite in das kleine Loch am Joch nach dem Hindurchführen unter dem Zahnersatz und zudem ohne direkte Sichtverbindung in der Enge des Mundes des Patienten ist nur mit viel Geschick und Übung möglich.

Aus dem deutschen Gebrauchsmuster G 8810805.8 ist weiter eine Abzugsvorrichtung, mit einer Schlagstange mit einer Schlagplattform, bekannt, an deren oberen Ende ein Drahtführungsgehäuse angeordnet ist, an welchem die beiden Enden einer Drahtschlaufe befestigt sind. Das eine Ende kann vom Drahtführungsgehäuse gelöst und unter dem Zahnersatz hindurchgeführt werden. Mit der Schlagstange kann der Zahnersatz anschliessend von seiner Befestigung abgezogen werden. Diese bekannte Vorrichtung hat den Nachteil, dass es sehr schwierig ist, das unter dem Zahnersatz hindurchgeführte Ende der Drahtschlaufe in die entsprechende Öffnung am Drahtführungsgehäuse einzuführen und dort zu verrasten.

Die Aufgabe der Erfindung besteht nun darin, eine Vorrichtung zum Abziehen oder Entfernen von Zahnbrücken zu schaffen, welche durch den Zahnarzt oder Zahntechniker in einfacher Weise einhändig bedient werden kann.
Gelöst wird diese Aufgabe durch eine Vorrichtung mit den Merkmalen des Anspruches 1.

Es gelingt mit der erfindungsgemässen Vorrichtung, die zu entfernenden Teile derart zu ergreifen, dass beim Abziehen keine Beschädigungen entstehen und eine Wiederverwendung ohne vorangehende Reparatur möglich wird.

Die Abzugsvorrichtung kann auf den herkömmlichen Kronenentferner, auch Hirtenstäbe genannt, aufgesetzt und benutzt werden; sie kann aber auch mit herkömmlichen Abziehhaken erfasst werden.

Der elastisch biegsame Draht am Drahtverankerungsgehäuse kann ohne Verletzung des Zahnfleisches und der Krone zwischen dem Zahnfleisch und der Krone hindurchgeführt und seitlich in das Drahtverankerungsgehäuse eingelegt werden. Beim Abziehen wird der Draht unverrückbar verrastet gehalten. Je nach Lage der abzuziehenden Krone kann der Zahnarzt mittels einem seiner vorhandenen Haken im Zentrum, oben, oder falls vorgesehen, an einem Bügel des Gehäuses letzteres ergreifen und daran ziehen. Er kann gleichzeitig mehrere Schlaufen im Mund des Patienten mit der Brücke verbinden und abwechslungsweise daran ziehen, um eine regelmässige Lockerung des Zahnersatzes zu erreichen.

Anhand illustrierter Ausführungsbeispiele wird die Erfindung näher erläutert. Es zeigen:
- Fig. 1: eine Ansicht der Erfindung mit einer Drahtschlaufe,
- Fig. 2: eine Seitenansicht der Vorrichtung in Fig. 1 und
- Fig. 3: einen Ausschnitt längs Linie X-X in Fig. 1.

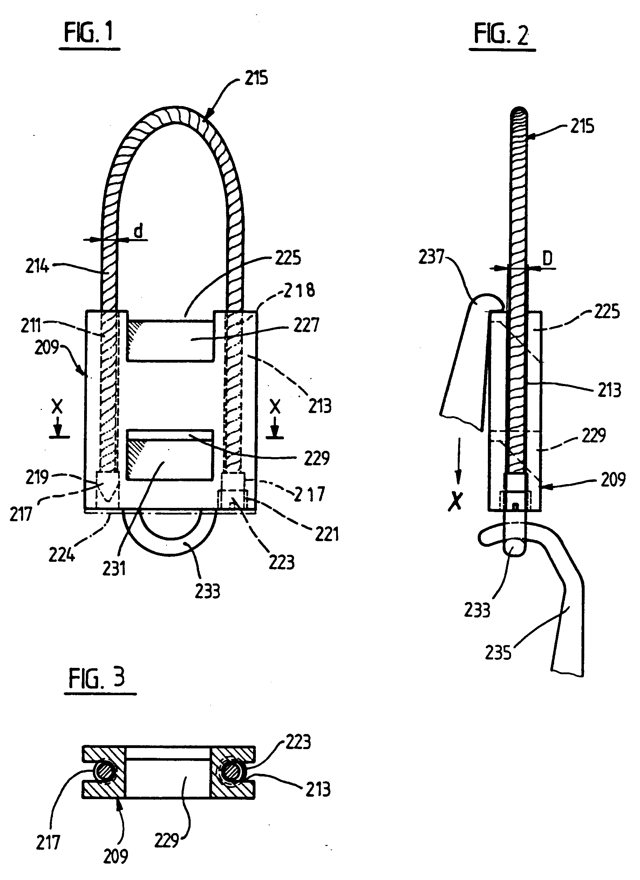

In Figur 1 ist ein Drahtverankerungsgehäuse 209 dargestellt, in welchem zwei im wesentlichen parallel verlaufende Bohrungen 211 eingelassen sind, welche seitlich durch einen Schlitz 213 mit der Oberfläche des Verankerungsgehäuses 209 verbunden sind. Die Bohrungen 211 weisen einen Durchmesser D auf, der geringfügig grösser ist, als der Durchmesser d des Drahtes 214 einer Drahtschlaufe 215. Die Drahtschlaufe 215 besteht aus biegsamen Drahtlitzen aus hochfestem Stahl oder dergleichen. Auf den beiden offenen Enden der Drahtschlaufe 215 sind Hülsen 217 aufgepresst oder aufgelötet, deren Durchmesser grösser ist, als der Durchmesser D der Bohrung 211. Die Hülsen 217 liegen in einem Abschnitt 219 der Bohrung 211, dessen Durchmesser grösser ist, als der Durchmesser D. In einem der beiden Abschnitte 219, in der Figur 1 in demjenigen auf der rechten Seite, ist ein Gewinde 221 eingelassen, in das eine Schraube 223 eingedreht ist, welche die Hülse 217 im Abschnitt 219 unlösbar festhält. Anstelle einer Schraube 223 kann selbstverständlich auch ein anders ausgebildetes Sicherungselement, z.B. eine Scheibe 224, mit einer Öffnung im Bereich der Bohrung 219 auf der Unterseite des Verankerungsgehäuses 209 angebracht werden.

Zwischen den beiden Schenkeln der Schlaufe 215 ist am Verankerungsgehäuse 209 ein Einschnitt 225 mit einer schräg verlaufenden Basisfläche 227 angebracht. Im Zentrum des Verankerungsgehäuses 209 ist ein Loch 229 eingelassen, bei dem die untere Fläche 231 ebenfalls geneigt zur Horizontalen liegen kann. An der Unterseite des Verankerungsgehäuses kann zudem ein Bügel 233 angebracht sein, der das Einführen des Endes eines bekannten Hakens 235, wie er bei Zahnärzten für andere Zwecke verwendet wird und daher bereits vorhanden ist, ermöglicht (Figur 2). Sowohl die Ausnehmung 225 als auch das Loch 229 und der Bügel 233 sind dazu geeignet, dass ein Stufenhaken 237 (Figur 2) sicher Halt finden kann.

Die Vorrichtung nach den Figuren 1 bis 3 wird wie folgt eingesetzt. Der Arzt führt das aus dem Verankerungsgehäuse 209 lösbare, vorzugsweise mit der zylinder- oder kegelförmigen Hülse 217 versehene Ende 218 der Drahtschlaufe 215 zwischen zwei benachbart liegende Kronen der zu entfernenden Brücke hindurch und legt das Ende 218 seitlich durch den Schlitz 213 in die Bohrung 211 ein. Sobald er das Verankerungsgehäuse 209 mittels eines Hakens 235,237 an der Ausnehmung 225, der Bohrung 229 oder am Bügel 233 erfasst, wird die Hülse 217 am Drahtende 218 in den Abschnitt 219 hineingezogen und hält die Drahtschlaufe 215 im Gehäuse 209 fest. Nun kann der Zahnersatz abgezogen werden. Sollte sich beim Abziehen des Zahnersatzes zeigen, dass der Haken 235,237 nur mit Mühe geführt werden kann, so hängt der Arzt den Haken 235,237 an einer geeigneteren Stelle des Verankerungsgehäuses 209 ein.

## Patentansprüche

1. Vorrichtung zum Abziehen oder Entfernen von Zahnbrücken von den Präparationen, mit einer Drahtschlaufe (215), deren beide Enden (218) an einem Verankerungsgehäuse (209) befestigbar sind, dadurch gekennzeichnet, dass am Verankerungsgehäuse (209) seitlich ein Schlitz (213) zum seitlichen Einlegen des einen Endes der Drahtschlaufe in eine mit dem Schlitz (213) verbundene offene Bohrung (211) angebracht ist, deren unteres Ende einen erweiterten Abschnitt (219) zur Aufnahme einer Verdickung (217) an dem einen Ende der Drahtschlaufe (215) aufweist, dass der Durchmesser (D) der Bohrung (211) und die Öffnungsweite des Schlitzes (213) etwas grösser sind als die Dicke (d) des Drahtes (214) der Drahtschlaufe (215), und dass der Durchmesser der das verdickte Ende der Drahtschlaufe (215) bildenden Hülse (217) grösser ist, als der Durchmesser (D) der Bohrung (211).

2. Vorrichtung nach Anspruch 1, dadurch gekennzeichnet, dass an beiden Seiten des Verankerungsgehäuses (209) Schlitze (213) und Bohrungen (211) angebracht sind.

3. Vorrichtung nach einem der Ansprüche 1 oder 2, dadurch gekennzeichnet, dass in einem der Abschnitte (219) ein Gewinde (221), in das eine Schraube (223) eindrehbar ist, oder dass an der Unterseite des Verankerungsgehäuses (209) eine Scheibe (224) zum Abdecken einer der Bohrungen (211) angebracht sind.

4. Vorrichtung nach einem der Ansprüche 1 bis 3, dadurch gekennzeichnet, dass am Verankerungsgehäuse (209) eine oben offene Ausnehmung (225) und/oder ein Loch (229) und/oder ein Bügel (233) zum Ansetzen eines Hakens (235,237) angebracht ist.

## Claims

1. Device for detaching or removing dental bridges from the preparations, having a wire loop (215), the two ends (218) of which being mountable on a securing housing (209), characterised in that a slot (213) is provided laterally on the securing housing (209) for one end of the wire loop to be laterally inserted into an open bore (211), which communicates with the slot (213), the lower end of said bore having a widened portion (219) to receive a thickened portion (217) at one end of the wire loop (215), in that the diameter (D) of the bore (211) and the width of opening of the slot (213) are substantially greater than the thickness (d) of the wire (214) of the wire loop (215), and in that the diameter of the sleeve (217), which forms the thickened end of the wire loop (215), is greater than the diameter (D) of the bore (211).

2. Device according to claim 1, characterised in that slots (213) and bores (211) are provided on both sides of the securing housing (209).

3. Device according to one of claims 1 or 2, characterised in that a thread (221) is provided in one of the portions (219), a screw (223) being screw-connectable into said thread, or in that a plate (224) for covering one of the bores (211) is provided on the underside of the securing housing (209).

4. Device according to one of claims 1 to 3, characterised in that an upwardly open recess (225) and/or a hole (229) and/or a clamp (233) are or is provided on the securing housing (209) for the attachment of a hook (235, 237).

## Revendications

1. Dispositif pour déposer ou enlever des bridges dentaires de l'armature, muni d'une boucle de fil de fer (215) dont les deux extrémités (218) sont fixées à un boîtier d'ancrage (209), caractérisé en ce qu'une fente (213) est pratiquée sur le côte du boîtier d'ancrage (209) afin d'insérer, par le côté, une extrémité de la boucle de fil dans un puits (211) ouvert, en liaison avec la fente (213), dont l'extrémité inférieure présente une logette (219) élargie pour recevoir un épaissement (217) à l'extrémité de la boucle de fil (215), en ce que le diamètre (D) du puits (211) et la largeur de l'ouverture de fente (213) sont supérieurs à la grosseur du fil (214) de la boucle de fil (215), formant une douille (217) est supérieur au diamètre (D) du puits (211)

2. Dispositif selon la revendication 1, caractérisé en ce que des deux côtés du boîtier d'ancrage (209) sont aménagés des fentes latérales (213) et des puits (211).

3. Dispositif selon l'une des revendications 1 ou 2, caractérisé en ce qu'un pas de vis (221), dans lequel est vissée une vis (223), est creusé dans une des logettes (219), ou en ce qu'un disque (224) est fixé à la partie inférieure du boîtier d'ancrage (209) pour fermer un des puits (211).

4. Dispositif selon l'une revendications 1 à 3, caractérisé en ce que le boîtier d'ancrage (209) présente une ouverture (225) dans sa partie supérieure et/ou une lucarne (229) et/ou une anse (233) pour l'arrimage d'un crochet (235,237).
